# EUROPEAN PATENT SPECIFICATION

(11) **EP 3 429 858 B1**
(45) Date of publication and mention of the grant of the patent: **30.12.2020**
(21) Application number: 16909063.6
(22) Date of filing: 21.07.2016
(51) Int. Cl.: B41J 2/14, B41J 2/045, B41J 2/16

(54) **PRINTHEAD WITH A COMPLEX IMPEDANCE SENSOR AND METHOD USING THE SAME**
DRUCKKOPF MIT EINEM KOMPLEX IMPEDANZ SENSOR UND ENTSPRECHENDES VERFAHREN
TÊTE D'IMPRESSION AVEC UN CAPTEUR D'IMPÉDANCE COMPLEXE ET MÉTHODE CORRESPONDANTE

(43) Date of publication of application: 23.01.2019
(73) Proprietor: Hewlett-Packard Development Company, L.P., Spring TX 77389 (US)
(72) Inventor: CHEN, Chien-Hua, Corvallis, Oregon 97330 (US); CUMBIE, Michael W., Corvallis, Oregon 97330 (US); MOUREY, Devin Alexander, Corvallis, Oregon 97330 (US)
(74) Representative: Haseltine Lake Kempner LLP
(86) International application number: PCT/US2016/043311
(87) International publication number: WO 2018/021990

(56) References cited:
- EP-A1- 1 493 586
- WO-A1-2013/062516
- US-A1- 2013 278 656

## Description

### BACKGROUND

Printing devices access a source of fluid from a reservoir within, for example, a printing cartridge in order to apply an image to the surface of a media. The fluid may be any type of printing fluid such as an ink. In some instances, these printing fluids may be replaced with non-original printing fluids after the original printing fluid has been consumed.

WO 2013/062516 A1 and US2013/0278656A1 disclose methods of using sensors to detect impedance in a fluid in printing devices.

### BRIEF DESCRIPTION OF THE DRAWINGS

The accompanying drawings illustrate various examples of the principles described herein and are a part of the specification. The illustrated examples are given merely for illustration, and do not limit the scope of the claims. The present invention is defined by the appended claims.
Fig. 1 is block diagram of a printhead according to an example of the principles described herein.
Fig. 2 is a line graph showing example complex impedance values of four different printing fluids according to an example of the principles described herein.
Fig. 3 is a block diagram of a printing device according to an example of the principles described herein.
Figs. 4A through 4C are block side cutout diagrams showing three examples of a printhead according to three examples of the principles described herein.
Figs. 5A though 5F are block side cutout diagrams depicting a method of manufacturing the printhead of Fig. 4A according to one example of the principles described herein.
Fig. 6 is a flowchart showing a method of determining printing fluid characteristics of a printing fluid provided to a printhead according to an example of the principles described herein

Throughout the drawings, identical reference numbers designate similar, but not necessarily identical, elements.

### DETAILED DESCRIPTION

As described above, certain printing devices use a source of printing fluid or a reservoir that provides printing fluid to a printhead used during a printing process. The printing fluid may travel though a number of tubes and/or channels before it reaches a printhead and is ejected out onto a print media. In some instances, the printing fluid provided to the printhead may include or be devoid of certain characteristics that provide for proper functioning of the printhead or provide for an optimally appealing finished product. These characteristics may include contaminants in the printing fluid, a reduction in water within the printing fluid, an amount of pigment in the printing fluid, as well as the introduction or loss of certain other components of the printing fluid, among others. In some examples, these detected characteristics may indicate poor printing fluid quality or improper printing fluid use at the printhead. Use of some printing fluids that include these characteristics may cause damage to the printhead and/or printing device or, when used, may result in a relatively inferior image produced on the print media.

The present specification describes a printhead including a nozzle, a firing chamber fluidly coupled to the nozzle, a printing fluid slot fluidly coupled to the firing chamber, and a sensor to detect a plurality of complex impedance values of a printing fluid at the printhead over a plurality of frequencies and create a printing fluid signature of the printing fluid. The present specification also describes a method of determining at least one characteristic of a printing fluid provided to a printhead including, with a number of sensors, applying an alternating current at a plurality of frequencies over time to the printing fluid to receive a plurality of complex impedance values comparing the plurality of complex impedance signals to a number of stored signals.

The present specification also describes a printing device that includes a print cartridge including a printhead and a sensor coupled to the printhead to detect a plurality of complex impedance values of a printing fluid at the printhead.

As used in the present specification and in the appended claims, the term "printing fluid" is meant to be understood as any fluid that may be ejected from a printhead onto a print media. In an example, the printing fluid is an ink.

Additionally, as used in the present specification and in the appended claims, the term "media" or "print media" is meant to be understood as any surface onto which a printing fluid may be deposited thereon by a printhead of a printing device. In an example, the media is a sheet of paper.

Further, as used in the present specification and in the appended claims, the term "complex impedance" is meant to be understood as a value of the impedance having both a real and imaginary component. In an example, the magnitude and phase characteristics of the complex impedance is represented as: $Z = \left|Z\right| {e}^{jarg \left(Z\right)}$
where the magnitude |Z| represents the ratio of the voltage difference amplitude to the current amplitude, while the argument arg^{(Z)} gives the phase difference between voltage and current.

Further, as used in the present specification and in the appended claims, the term "a number of" or similar language is meant to be understood broadly as any positive number including 1 to infinity.

In the following description, for purposes of explanation, numerous specific details are set forth in order to provide a thorough understanding of the present systems and methods. It will be apparent, however, to one skilled in the art that the present apparatus, systems and methods may be practiced without these specific details. Reference in the specification to "an example" or similar language means that a particular feature, structure, or characteristic described in connection with that example is included as described, but may not be included in other examples.

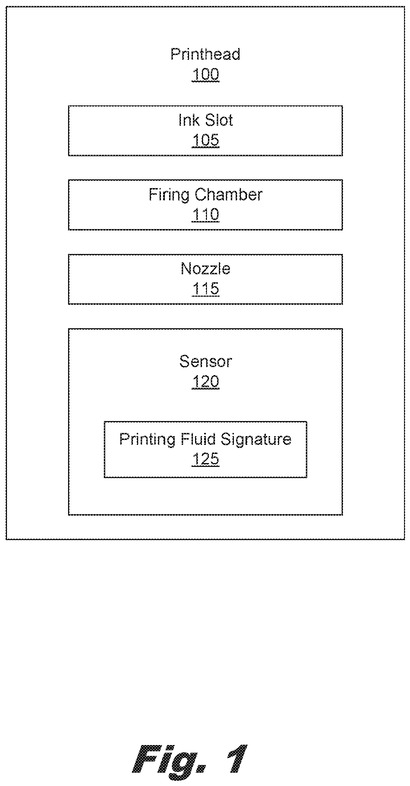

Turing to the figures, Fig. 1 is block diagram of a printhead (100) according to an example of the principles described herein. The printhead (100) may include an ink slot (105), a firing chamber (110), a nozzle (115), and a sensor (120). Each of these will now be described in more detail.

The printhead (100) may be any type of printhead that ejects a printing fluid such as ink onto print media. In an example, the printhead (100) is a piezoelectric printhead implementing a piezoelectric device to force an amount of printing fluid out of the firing chamber (110), through the nozzle (115), and onto the print media. In another example, the printhead (100) is a thermal inkjet printhead that uses a heat source to create bubbles within the printing fluid that force an amount of printing fluid out of the firing chamber (110), through the nozzle (115), and onto the print media. In either case, the firing chamber (110) of the printhead (100) may be supplied with printing fluid via an ink slot (105) fluidly coupled to a number of similar firing chambers (110).

The sensor (120) includes a pair of electrodes. The electrodes measure the complex impedance of the printing fluid as it passes through the ink slot (105), the firing chamber (110), the nozzle (115), or combinations thereof. By introducing an alternating signal at a plurality of different frequencies to the electrodes, a plurality of complex impedance values of the printing fluid in the printhead (100) may be determined and a resulting "signature" (125) of the printing fluid in the Fourier domain may be created. This signature (125) of the printing fluid may be used to compare with the signatures of other printing fluids or types of printing fluids in order to determine the characteristics of the printing fluid being used at the printhead (100). As discussed above, these characteristics may include, among others, characteristics of a contaminated printing fluid, characteristics of a relatively dryer printing fluid, as well as characteristics defining a composition of different types of printing fluids. This determination may be made as the complex impedance values of the printing fluid are sent to a processor for further analysis by the processor. A comparison of the signature (125) of the printing fluid to other signatures associated with other printing fluids may be made by the processor. This may result in a determination as to the health of the printing fluid at the printhead (100) or the presence of a printing fluid at the printhead (100) that may cause damage to parts of the printhead (100).

In an example, an associated signal may be sent to a user or printing device component when the printing device detects a certain printing fluid characteristic, such as, e.g., a contaminated printing fluid, and/or a dryer printing fluid, in order to better inform the user of the printing device regarding proper maintenance of the printing device. In an example, the associated signal may additionally or alternatively include information about the type of printing fluid detected and/or whether that printing fluid's signature (125) matches the signature of the printing fluid expected to be present at the printhead. This may result in the user being aware of which printing fluid should be used in connection with the printhead (100) in order to produce the best possible printed product. This may further result in better user satisfaction as a result of the guidance provided to the user and resulting printed products.

As mentioned above, each printing fluid may have a unique signature (125) presented in the Fourier domain by the processor associated with the printhead (100). The signature (125) may be created after the sensor (120) has measured a plurality of complex impedance values of the printing fluid over a plurality of different alternating current frequencies. Because electrical impedance is the measure of the opposition that a circuit, such as the electrodes of the sensor (120), presents to a current when a voltage is applied, the complex impedance is the complex ratio of the voltage to the alternating current at a particular frequency. During operation, the electrodes of the sensor (120) may apply decreasing or increasing frequencies of alternating current across the electrodes to receive different impedance values at these different frequencies. These impedance values may then be sent to the processor to be transformed into the Fourier domain, graphed to create the signature (125), and compared to other signatures of other types of printing fluids in a look-up table stored in a memory device associated with the processor and printhead (100).

In an example, along with detecting whether a certain printing fluid is present, the sensor (120) may further detect whether a printing fluid has lost water content due to aging of the printing fluid or leaks in the printhead (100). This may be done by comparing the signature of the printing fluid created from the complex impedance values detected by the sensor (120) with the signature (125) of the printing fluid expected to be in the printhead (100). Further, in an example, the sensor (120) may further detect whether a printing fluid includes unexpected contaminants introduced into the printing fluid during the printhead (100) manufacturing process or as a by-product of an interaction between the printing fluid and the surrounding environment.

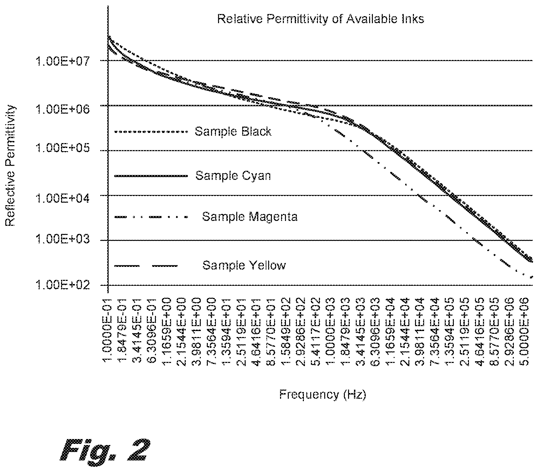

Fig. 2 is a line graph (200) showing example plotted complex impedance values of four different printing fluids according to an example of the principles described herein. As can be seen as the frequency of the applied AC current across the electrodes of the sensor (120) increases from 0.1 Hz to 5000000 Hz, the permittivity of each of the printing fluids generally decrease but decreases at different rates. The resulting lines indicated the specific complex impedance signature (Fig. 1, 125) of each of the individual printing fluids being monitored. These plotted lines may be generated by the processor as the processor receives the plurality of impedance values from the sensor (120) at the indicated frequencies. The plotted lines may then be compared to other plotted lines maintained in the look-up table of the memory device or other database described above to determine whether the printing fluid being used is one of the predetermined printing fluids plotted in the table.

In an example, the impedance of any capacitive element within a printing fluid may decrease with an increase in the frequency of the alternating current applied to the electrodes of the sensor. In an example, this effect may offset a permittivity change recorded by the sensor to a degree.

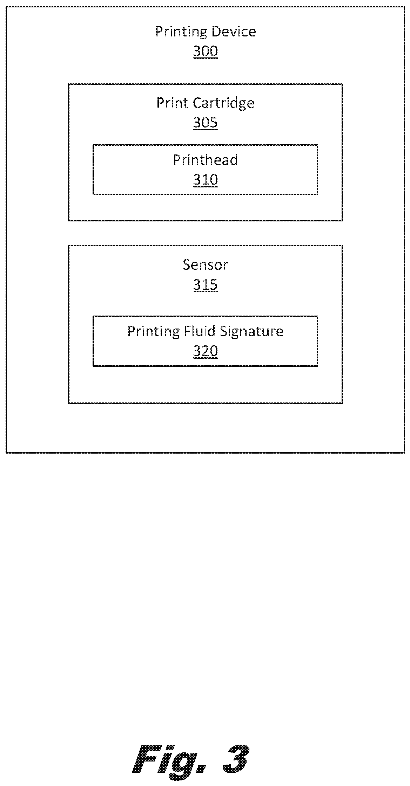

Fig. 3 is a block diagram of a printing device (300) according to an example. of the principles described herein. The printing device (300) may include a print cartridge (305) including a printhead (310) and a sensor (315) coupled to the printhead. These will now be described in more detail.

The printing device (300) may be any device that includes a processor that directs the print cartridge (305) to pass across a print media in order to position the printhead (310) over the print media and eject an amount of printing fluid thereon. The printing device (300) may include any additional devices to move the print cartridge (305) as well as the print media through the printing device (300). As described above, the processor of the printing device (300) may further receive signals from the sensor (315) on the printhead (310) describing the plurality of complex impedance values at a plurality of alternating current frequencies of the printing fluid passing through the print cartridge (305) and printhead (310).

As also described above, the sensor (120) may be used to detect the complex impedance values of the printing fluid and pass those values to the processor of the printing device (300) to compare a calculated signature (320) with other signatures of other printing fluids.

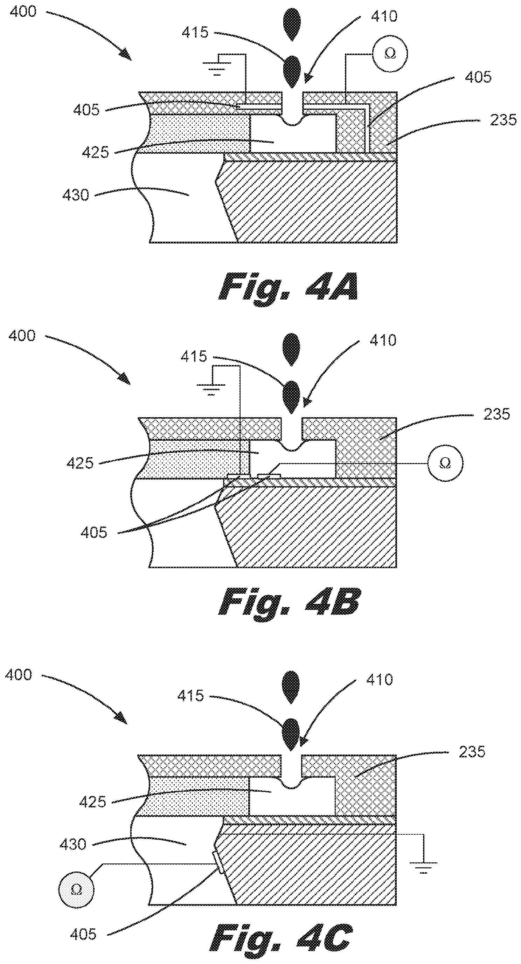

Figs. 4A through 4C are block side cutout diagrams show three examples of a printhead (400) according to three examples of the principles described herein. Fig. 4A is a block diagram of a printhead (400) having a sensor (405) located at a nozzle (410) of the printhead (400). The sensor (405) may include, for example, two electrodes with a first electrode being connected to ground and a second electrode being connected to an alternating current at varying frequencies. An electrical conductance (Ω) at each frequency may then be detected and the signal may be sent to the processor as described above.

During operation of the printhead (400) of Fig. 4A the sensor (405) may detect the conductance (Ω) of the printing fluid (415) during a printing fluid (415) ejection process. When the printing fluid (415) is ejected, the complex impedance values (Ω) as described above are then sent to the processor for comparison as described above. In an example, the impedance values may be detected between 0 and 20 µs after the fluid ejection process has commenced and the printing fluid is pushed out of the nozzle. Between these times, the ejected printing fluid may form as a mass within the nozzle and between the electrode spanning the nozzle. In an example, the impedance values may be detected at 10 µs after the fluid ejection process has commenced and the printing fluid is pushed out of the nozzle.

In an example, the sensor (405) may further detect the presence or absence of an ejected drop of printing fluid (415) when, for example, an ejection process is initiated. Where, for example, an impedance is not detected, this may be indicative of a malfunctioning printhead (400) or ejection device in the printhead (400). When such a detection is made, a signal may be sent to the processor indicating as such.

During manufacturing of the printhead (400) of Fig. 4B, the sensor (405) with its electrodes may be integrated into an SU-8 layer (235). The SU-8 layer (235) may be manufactured via, for example, a photolithography process.

Fig. 4B is a block diagram of a printhead (400) having a sensor (405) located within an ejection chamber (425) of the printhead (400). As above, the sensor (405) may include, for example, two electrodes with a first electrode being connected to ground and a second electrode being connected to an alternating current as varying frequencies. An electrical conductance (Ω) at each frequency may then be detected and the signal may be sent to the processor as described above.

During operation of the printhead (400) of Fig. 4B the sensor (405) may detect the conductance (Ω) of the printing fluid (415) whenever a printing fluid (415) is introduced into the ejection chamber (425). Whenever the printing fluid (415) is present in the ejection chamber (425), the complex impedance values (Ω) as described above are then sent to the processor for comparison as described above. In an example, the sensor (405) may detect the complex impedance of the printing fluid (415) after the printing fluid (415) has been ejected from the ejection chamber (425). In this example, the ejection chamber (425) may be refilled with printing fluid (415) after ejection of the printing fluid (415). In some instances, the ejection of the printing fluid (415) may cause a temporary vacancy within the ejection chamber (425) and the sensing by the sensor (405) may be impeded when the printing fluid (415) is not in contact with the sensor (405).

In an example, the printhead (400) may be a thermal inkjet printhead and may include circuitry within the ejection chamber (425) to heat up a resistive element. The heating of the resistive element causes the printing fluid (415) to be ejected from the nozzle (410). In an example, the electrodes of the sensor (405) may be integrated into the circuitry of the thermal inkjet printhead. This may allow for relative ease of manufacturing the printhead (400) because the sensors (405) for each ejection chamber (425) may be manufactured at or around the same time the circuitry is manufactured.

Fig. 4C is a block diagram of a printhead (400) having a sensor (405) located within a fluid feed slot (430) of the printhead (400). In this example, the sensor (405) may include a single electrode with the printing fluid (415) creating an electrical connection between the electrode and a ground. The first electrode may be connected to an alternating current as varying frequencies. An electrical conductance (Ω) at each frequency may then be detected and the signal may be sent to the processor as described above.

During operation of the printhead (400) of Fig. 4C the sensor (405) may detect the conductance (Ω) of the printing fluid (415) whenever printing fluid (415) is introduced into the fluid feed slot (430). Whenever the printing fluid (415) is present in the fluid feed slot (430), the complex impedance values (Ω) as described above are then sent to the processor for comparison as described above. Although the fluid feed slot (430) may relatively consistently have printing fluid (415) flowing therethrough, there may be circumstances where the printing fluid (415) is not present. Such a situation may occur where the entirety of the supply of printing fluid (415) has been consumed. In this case, the absence of a detected impedance may indicate to the processor that there is an issue with the printhead (400) or the supply of printing fluid (415) has been exhausted. If such a situation occurs, the processor may so indicate to a user of a printing device associated with the printhead (400) and processor that there are issues or that the supply of printing fluid (415) has been exhausted.

During a manufacturing process of the printhead (400) of Fig. 4C, the sensor (405) may be placed within the fluid feed slot (430) after cutting the fluid feed slot (430) out of the layer through which the fluid feed slot (430) is made. Although the manufacturing processes described above, present examples of where and how the sensor (405) may be added to the printhead (400), there are meant only as examples. Consequently, the present specification contemplates any number of other methods of manufacture and sensor (405) placement without specifically being limited to the above examples.

In an example the size and shape of the electrodes forming the sensor (405) may be designed to obtain the strongest signal strength of the complex impedance measurement. In this example, the signal strength is proportional to the size of electrode and several orders of magnitude of signal strength may be increased as the surface area of the electrodes increases. In an example, the magnitude of how the surface area of the electrodes increases the signal strength of the complex impedance measurement may vary with the type, color, family, etc. of the printing fluid (415).

In an example, the distance between electrodes of each sensor (405) is separated by a distance of 300 µm or more. In this case, less than 300µm distance between the electrodes may risk shorting of the sensor (405) due to, for example, pigment agglomerations in the printing fluid (415).

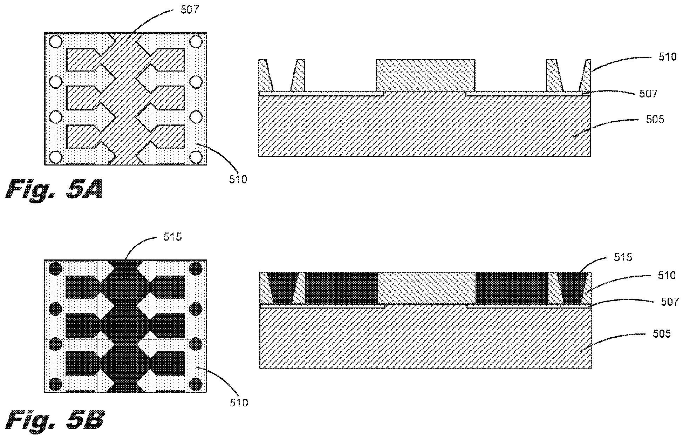

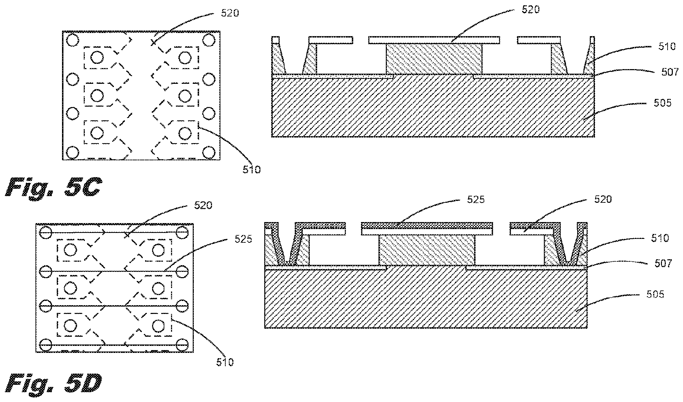

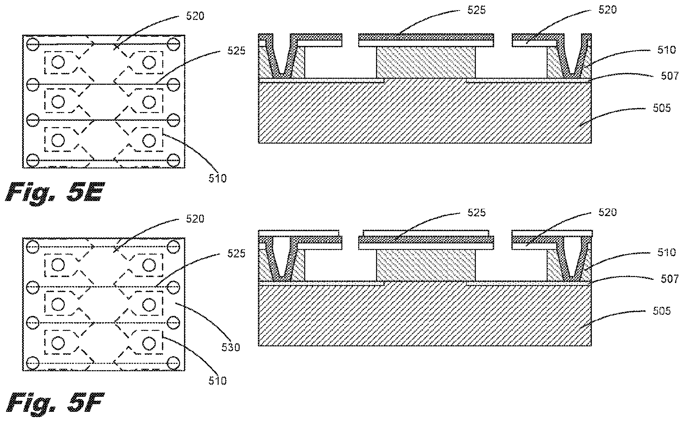

Figs. 5A though 5F are block side cutout diagrams depicting a method of manufacturing the printhead (400) of Fig. 4A according to one example of the principles described herein. The method of manufacture may begin by placing a layer of SU-8 (510) on a wafer layer (505) including a thermal inkjet thin film layer (507) as depicted in Fig. 5A. In an example the wafer layer (505) may be made of silicon. The method may continue with spin coating a wax material (515) into the chambers created in the layer of SU-8 (510) as depicted in Fig. 5B. Next, a top hat layer (520) may be laminated over the SU-8 layer (510) and the wax material layer (515) from the SU-8 layer (510) as depicted in Fig. 5C. In an example, the wax material layer (515) may be removed during the lamination of the top hat layer (520). The method may continue with depositing metal traces (525) over the top hat layer (520). In an example, the metal traces (525) may be patterned and etched from a metallic layer placed over the top hat layer (520). In an example, the metal traces (525) may be made of platinum, palladium, gold, or some other conductive metal.

The method may continue with applying a second top hat layer (530) over the metal traces (525). The method may further include etching a backside slot though the wafer layer (505) to form the fluid feed slot (430) described above. The above method of manufacturing is meant only as an example, and the present specification contemplates other process and methods of manufacturing the printhead (400) described above.

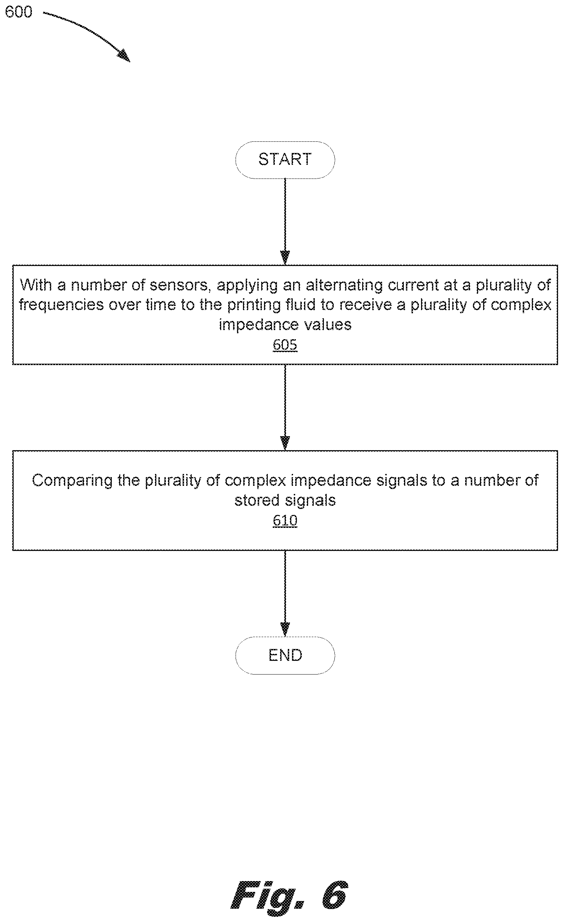

Fig. 6 is a flowchart showing a method (600) of determining at least one characteristic of a printing fluid provided to a printhead according to an example of the principles described herein. The method (600) may begin by, with a number of sensors, applying (605) an alternating current at a plurality of frequencies over time to the printing fluid to receive a plurality of complex impedance values. Again, the sensor (405) described above may be present in a nozzle (410), ejection chamber (425), and/or fluid feed slot (430) of the printhead (400) and may each send the plurality of complex impedance signals to a processor for processing as described above.

The method (600) may continue by, with a processor associated with the printhead (400), comparing (610) the plurality of complex impedance signals to a number of signals in a database. The number of complex impedance signals may be used to form a printing fluid signature (Fig. 3, 320) represented in the Fourier domain which is then compared to other signatures stored in a database.

The sensors (405) described herein may be used to detected certain characteristics of a printing fluid at a printhead (Fig. 1, 100) within a printing device (Fig. 3, 300). The electrodes of the sensor (405) are integrated in different parts of printhead such as the nozzle (410), as integrated as part of circuitry in an ejection chamber (425) of the printhead (400), and/or on walls of the fluid feed slot (430). In the examples where the electrodes of the sensor (405) are on walls of the fluid feed slot (430), a thin dielectric layer and a metal electrode layer can be deposited through shadow mask on one side of fluid feed slot (430) so that two large parallel electrodes (one on metal and the second one on silicon) made be provided in order to increase the impedance signal for the printing fluid (415) property sensing. The sensor (405) can also be fabricated as part of a thermal inkjet circuitry in order to reduce costs associated with manufacturing the printhead (400).

Printing fluid (415) property sensing can also help to detect issues such as ink health or water loss through comparison with the complex impedance of a printing fluid (415) that should be present in the printhead (400). Due to the printing fluid (415) batch variations, traces of contaminant can be introduced to printing fluid (415) in a printhead during the manufacturing process or as a by-product of the interaction between ink and the surrounding environment. Water loss can come from the aging of the ink or small leak in a print head. Each of these effects to the printing fluid (415) may be detected and relayed back to the user as a warning that provides diagnosis of the health of the printing fluid (415) and remedies to fix the issues if present.

Aspects of the present system and method are described herein with reference to flowchart illustrations and/or block diagrams of methods, apparatus (systems) and computer program products according to examples of the principles described herein. Each block of the flowchart illustrations and block diagrams, and combinations of blocks in the flowchart illustrations and block diagrams, may be implemented by computer usable program code. The computer usable program code may be provided to a processor of a general purpose computer, special purpose computer, or other programmable data processing apparatus to produce a machine, such that the computer usable program code, when executed via, for example, the processor of the printing device (300) or other programmable data processing apparatus, implement the functions or acts specified in the flowchart and/or block diagram block or blocks. In one example, the computer usable program code may be embodied within a computer readable storage medium; the computer readable storage medium being part of the computer program product. In one example, the computer readable storage medium is a non-transitory computer readable medium.

As described above, the present specification describes a sensor to detect certain characteristics of a printing fluid in a printhead by measuring the complex impedance values of the printing fluid over a plurality of frequencies. As discussed above, these characteristics may include, among others, characteristics of a contaminated printing fluid, characteristics of a relatively dryer printing fluid, as well as characteristics defining a composition of different types of printing fluids. The sensor may include a number of electrodes that have an alternating current applied to them. The complex impedance is measured at different frequencies of alternating current over time to develop a complex impedance "signature" of the printing fluid in the Fourier domain. Consequently, this complex impedance "signature" may be compared to the signatures of other types of printing fluids to determine if a certain printing fluid characteristic is present. For example, the signature may be compared in order to determine whether the printing fluid includes contaminants, whether the printing fluid has lost a water component due to drying of the printing fluid, whether the printing fluid at the printhead comprises certain components expected to be present in the printing fluid, and/or what type of printing fluid is present, among others. In an example, an associated signal may be sent to a user or printer component when the printing device detects a certain printing fluid characteristic in order to better inform the user of the printing device regarding proper maintenance of the printing device and/or proper printing fluid use. This may result in better user satisfaction.

## Claims

1. A printhead (100; 310; 400) comprising:
a nozzle (115; 410);
a firing chamber (110; 425) fluidly coupled to the nozzle;
a printing fluid slot (105; 430) fluidly coupled to the firing chamber (110); and
a sensor (120; 315; 405) configured to detect a plurality of complex impedance values of a printing fluid at the printhead (100; 310; 400) over a plurality of frequencies and create a printing fluid signature (125) of the printing fluid based on the detected complex impedance values;
**characterised in that** the sensor (120; 315; 405) comprises two electrodes separated by a distance of 300 µm or more.

2. The printhead of claim 1, wherein the sensor (120; 315; 405) is placed across the nozzle (115).

3. The printhead of claim 1, wherein the electrodes of the sensor (120; 315; 405) are integrated electrically into a thermal inkjet circuitry of the printhead.

4. The printhead of claim 1, wherein the sensor is coupled to an interior surface of the printing fluid slot (105; 430).

5. The printhead of any preceding claim, wherein the sensor (120; 315; 405) is coupled to a processor associated with the printhead and wherein the processor receives the detected complex impedance values over the plurality of frequencies of the printing fluid.

6. The printhead of claim 5, wherein the processor compares the received complex impedance values over the plurality of frequencies with a complex impedance database to determine what printing fluid is at the printhead.

7. The printhead of any preceding claim, wherein the complex impedance is measured by measuring the impedance of the printing fluid over a distance at varying frequencies of alternating current over time.

8. A method of determining at least one characteristic of a printing fluid provided to a printhead (100; 310; 400), comprising:
with a number of sensors (120; 315; 405), each sensor comprising two electrodes separated by a distance of 300 µm or more, applying an alternating current at a plurality of frequencies over time to the printing fluid to receive a plurality of complex impedance values; and
comparing the plurality of complex impedance signals to a number of stored signals.

9. The method of claim 8, wherein comparing the complex impedance signals to a number of stored signals comprises comparing, in Fourier domain, a printing fluid signature derived from the complex impedance signals of the printing fluid present in the printhead with other printing fluid signatures of other printing fluids.

10. The method of claim 8 or 9, wherein a first sensor is incorporated into an orifice layer of the printhead and spanning a first nozzle defined in the orifice layer and wherein the sensor further detects a failed ejection of printing fluid from the first nozzle.

11. The method of claim 10, wherein a second nozzle defined the orifice layer comprises a second sensor and detects the complex impedance signal from the printing fluid when the first sensor detects a failed ejection of printing fluid from the first nozzle.

12. A printing device (300), comprising:
a print cartridge (305) comprising a printhead as claimed in any one of claims 1 to 7.

13. The printing device of claim 12, further comprising a printing fluid complex impedance database to compare the detected complex impedance values of the printing fluid with the complex impedance values of other printing fluids.

## Patentansprüche

1. Druckkopf (100; 310; 400), der Folgendes umfasst:
eine Düse (115; 410);
eine Abfeuerungskammer (110; 425), die mit der Düse fluidisch gekoppelt ist;
einen Druckfluidschlitz (105; 430), der mit der Abfeuerungskammer (110) fluidisch gekoppelt ist; und
einen Sensor (120; 315; 405), der dazu konfiguriert ist, mehrere komplexe Impedanzwerte eines Druckfluids an dem Druckkopf (100; 310; 400) über mehrere Frequenzen zu erfassen und eine Druckfluidsignatur (125) des Druckfluids basierend auf den erfassten komplexen Impedanzwerten zu erzeugen;
**dadurch gekennzeichnet, dass** der Sensor (120; 315; 405) zwei Elektroden umfasst, die durch einen Abstand von wenigstens 300 µm voneinander getrennt sind.

2. Druckkopf nach Anspruch 1, wobei der Sensor (120; 315; 405) über die Düse (115) hinweg angeordnet ist.

3. Druckkopf nach Anspruch 1, wobei die Elektroden des Sensors (120; 315; 405) in eine thermische Tintenstrahlschaltung des Druckkopfs elektrisch integriert sind.

4. Druckkopf nach Anspruch 1, wobei der Sensor mit einer Innenoberfläche des Druckfluidschlitzes (105; 430) gekoppelt ist.

5. Druckkopf nach einem der vorhergehenden Ansprüche, wobei der Sensor (120; 315; 405) mit einem Prozessor, der dem Druckkopf zugeordnet ist, gekoppelt ist und wobei der Prozessor die erfassten komplexen Impedanzwerte über die mehreren Frequenzen des Druckfluids empfängt.

6. Druckkopf nach Anspruch 5, wobei der Prozessor die empfangenen komplexen Impedanzwerte über die mehreren Frequenzen mit einer Kompleximpedanzdatenbank vergleicht, um zu bestimmen, welches Druckfluid sich an dem Druckkopf befindet.

7. Druckkopf nach einem der vorhergehenden Ansprüche, wobei die komplexe Impedanz durch Messen der Impedanz des Druckfluids über eine Entfernung bei variierenden Wechselstromfrequenzen über die Zeit gemessen wird.

8. Verfahren zum Bestimmen wenigstens eines Merkmals eines Druckfluids, das einem Druckkopf (100; 310; 400) bereitgestellt wird, das Folgendes umfasst:
mit einer Anzahl von Sensoren (120; 315; 405), wobei jeder Sensor zwei Elektroden umfasst, die durch einen Abstand von wenigstens 300 µm voneinander getrennt sind, Anlegen eines Wechselstroms mit mehreren Frequenzen über die Zeit an das Druckfluid, um mehrere komplexe Impedanzwerte zu empfangen; und
Vergleichen der mehreren komplexen Impedanzsignale mit einer Anzahl gespeicherter Signale.

9. Verfahren nach Anspruch 8, wobei das Vergleichen der komplexen Impedanzsignale mit einer Anzahl von gespeicherten Signalen das Vergleichen einer Druckfluidsignatur, die aus den komplexen Impedanzsignalen des Druckfluids abstammt, das im dem Druckkopf vorhanden ist, mit anderen Druckfluidsignaturen anderer Druckfluide in einer Fourier-Domäne umfasst.

10. Verfahren nach Anspruch 8 oder 9, wobei ein erster Sensor in eine Öffnungsschicht des Druckkopfs eingebaut ist und eine erste Düse überspannt, die in der Öffnungsschicht definiert ist, und wobei der Sensor ferner ein fehlgeschlagenes Ausstoßen von Druckfluid aus der ersten Düse erfasst.

11. Verfahren nach Anspruch 10, wobei eine zweite Düse, die die Öffnungsschicht definiert, einen zweiten Sensor umfasst und das komplexe Impedanzsignal von dem Druckfluid erfasst, wenn der erste Sensor ein fehlgeschlagenes Ausstoßen von Druckfluid aus der ersten Düse erfasst.

12. Druckvorrichtung (300), die Folgendes umfasst:
eine Druckpatrone (305), die einen Druckkopf nach einem der Ansprüche 1 bis 7 umfasst.

13. Druckvorrichtung nach Anspruch 12, die ferner eine Druckfluidkompleximpedanzdatenbank umfasst, um die erfassten komplexen Impedanzwerte des Druckfluids mit den komplexen Impedanzwerten anderer Druckfluide zu vergleichen.

## Revendications

1. Tête d'impression (100 ; 310 ; 400), comprenant :
une buse (115 ; 410) ;
une chambre d'éjection (110 ; 425) accouplée fluidiquement à la buse ;
une fente de fluide d'impression (105 ; 430) accouplée fluidiquement à la chambre d'éjection (110) ; et
un capteur (120 ; 315 ; 405) configuré pour détecter une pluralité de valeurs d'impédance complexe d'un fluide d'impression au niveau de la tête d'impression (100 ; 310 ; 400) sur une pluralité de fréquences et pour créer une signature de fluide d'impression (125) du fluide d'impression sur la base des valeurs d'impédance complexe détectées ;
**caractérisé en ce que**
le capteur (120 ; 315 ; 405) comprend deux électrodes séparées par une distance de 300 µm ou plus.

2. Tête d'impression selon la revendication 1, dans laquelle le capteur (120 ; 315 ; 405) est placé à travers la buse (115).

3. Tête d'impression selon la revendication 1, dans laquelle les électrodes du capteur (120 ; 315 ; 405) sont intégrées électriquement dans un circuit à jet d'encre thermique de la tête d'impression.

4. Tête d'impression selon la revendication 1, dans laquelle le capteur est accouplé à une surface intérieure de la fente de fluide d'impression (105 ; 430).

5. Tête d'impression selon l'une quelconque des revendications précédentes, dans laquelle le capteur (120 ; 315 ; 405) est couplé à un processeur associé à la tête d'impression et dans laquelle le processeur reçoit les valeurs d'impédance complexe détectées sur la pluralité de fréquences du fluide d'impression.

6. Tête d'impression selon la revendication 5, dans laquelle le processeur compare les valeurs d'impédance complexe reçues sur la pluralité de fréquences avec une base de données d'impédance complexe pour déterminer quel fluide d'impression se trouve au niveau de la tête d'impression.

7. Tête d'impression selon l'une quelconque des revendications précédentes, dans laquelle l'impédance complexe est mesurée en mesurant l'impédance du fluide d'impression sur une distance à des fréquences variables de courant alternatif dans le temps.

8. Procédé de détermination d'au moins une caractéristique d'un fluide d'impression fourni à une tête d'impression (100 ; 310 ; 400), comprenant :
avec un certain nombre de capteurs (120 ; 315 ; 405), chaque capteur comprenant deux électrodes séparées par une distance de 300 µm ou plus, l'application d'un courant alternatif à une pluralité de fréquences dans le temps au fluide d'impression pour recevoir une pluralité de valeurs d'impédance complexe ; et
la comparaison de la pluralité de signaux d'impédance complexe à un certain nombre de signaux stockés.

9. Procédé selon la revendication 8, dans lequel la comparaison des signaux d'impédance complexe à un certain nombre de signaux stockés comprend la comparaison, dans le domaine de Fourier, d'une signature de fluide d'impression dérivée des signaux d'impédance complexe du fluide d'impression présent dans la tête d'impression avec d'autres signatures de fluide d'impression d'autres fluides d'impression.

10. Procédé selon la revendication 8 ou 9, dans lequel un premier capteur est incorporé dans une couche d'orifice de la tête d'impression et couvre une première buse définie dans la couche d'orifice et dans lequel le capteur détecte en outre une éjection défaillante du fluide d'impression provenant de la première buse.

11. Procédé selon la revendication 10, dans lequel une seconde buse définissant la couche d'orifice comprend un second capteur et détecte le signal d'impédance complexe du fluide d'impression lorsque le premier capteur détecte une éjection défaillante du fluide d'impression provenant de la première buse.

12. Dispositif d'impression (300) comprenant :
une cartouche d'impression (305) comprenant une tête d'impression selon l'une quelconque des revendications 1 à 7.

13. Dispositif d'impression selon la revendication 12, comprenant en outre une base de données d'impédance complexe de fluide d'impression pour comparer les valeurs d'impédance complexe détectées du fluide d'impression avec les valeurs d'impédance complexe d'autres fluides d'impression.
